# EUROPÄISCHE PATENTSCHRIFT

(11) **EP 1 151 882 B1**
(45) Veröffentlichungstag und Bekanntmachung des Hinweises auf die Patenterteilung: **14.09.2005**
(21) Anmeldenummer: 01108272.4
(22) Anmeldetag: 02.04.2001
(51) Int. Cl.: B60J 7/14

(54) **Cabriolet-Fahrzeug**
Convertible vehicle
Véhicule convertible

(30) Priorität: 02.05.2000 DE 10021340
(43) Veröffentlichungstag der Anmeldung: 07.11.2001
(73) Patentinhaber: Wilhelm Karmann GmbH, 49084 Osnabrück (DE)
(72) Erfinder: Russke, Klaus, 49143 Bissendorf (DE)
(74) Vertreter: Busse & Busse Patentanwälte

(56) Entgegenhaltungen:
- DE-A- 10 020 663
- DE-A- 19 714 106
- US-A- 3 536 354
- US-A- 5 769 483

## Beschreibung

Die Erfindung betrifft ein Cabriolet-Fahrzeug mit zumindest drei separate Dachteile umfassendem Dach, nach dem Oberbegriff des Anspruchs 1.

Die Erfindung befaßt sich mit dem Problem, ein Cabriolet-Fahrzeug der aus DE 299 13 486 U1 bekannten Art so zu verbessern, daß die zur Bewegung der Dachteile vorgesehenen Gestängeeinheiten mit geringerer Antriebsleistung bewegbar sind und bei gemeinsamer Verlagerung der Dachteile im Bereich der Schwenklager eine Verringerung der Materialbelastungen möglich ist. Das Dokument US 3 536 354 A beschreibt den Oberbegriff des Anspruchs 1.

Die Erfindung löst diese Problem mit einem Cabriolet-Fahrzeug mit den Merkmalen des Anspruchs 1. Hinsichtlich weiterer Ausgestaltungen der Erfindung wird auf die Ansprüche 2 bis 12 verwiesen.

Das erfindungsgemäß ausgebildete Dach weist im Bereich seiner beiden die Stellbewegung der Dachteile im Bereich des Hauptlagers steuernden Bewegungseinheiten zumindest ein Zwischengetriebe auf, mit dem den über eine Koppelstange verbundenen Tragteilen der beiden Bewegungseinheiten verringerte Stellkräfte bereits dadurch vermittelbar sind, daß eine einstufige Untersetzung der Antriebsbewegung erfolgt. Dies ist insbesondere in den jeweiligen Anfangs- bzw. Endphasen beim Öffnungs- bzw. Schließvorgang vorteilhaft, weil in diesen Bewegungsphasen die insbesondere durch Verriegelungs- und/oder Totpunktpositionen der Gestängeteile bedingten Stellkräfte minimiert werden können und mit dem/den Zwischengetriebe(n) auch die Antriebsleistung zur Bewegungseinleitung reduziert werden kann. Während der Stellbewegung der Dachteile wird mit weitgehend konstanten Antriebskräften im Verlauf der gesamten Bewegungsbahn eine materialschonende Bewegung im Bereich der eine Vielzahl von Gestängeschenkeln aufweisenden Bewegungseinheiten erreicht.

Durch eine entsprechende Optimierung der Drehpunkte und Hebelverhältnisse in diesem Gestängesystem kann die Über- bzw. Untersetzung des Zwischengetriebes im Bereich der Getriebeglieder kraft- und geschwindigkeitsabhängig so variiert werden, daß mit geringem Aufwand eine Anpassung an unterschiedliche Dachsysteme möglich ist. Zusätzlich ist für die Ablegephase der Dachteile in den Kraftfluß eine Gasfeder als Dämpfungsglied integriert, mit der ein kontrolliertes Ablegen des Daches möglich ist und die anschließende Verlagerung des Daches in die Schließstellung aktiv unterstützt wird.

Weitere Einzelheiten der Erfindung ergeben sich aus der nachfolgenden Beschreibung und der Zeichnung, in der ein Ausführungsbeispiel des Gegenstands der Erfindung dargestellt ist. In der Zeichnung zeigen:
- Fig. 1: eine teilweise geschnittene Seitenansicht eines drei Dachteile aufweisenden Daches eines Cabriolet-Fahrzeugs in Schließstellung,
- Fig. 2: eine Seitenansicht ähnlich Fig. 1 während einer Öffnungsphase des Daches, und
- Fig. 3: eine Seitenansicht des in eine heckseitige Öffnungsstellung im Fahrzeug verlagerten Daches gemäß Fig. 1.

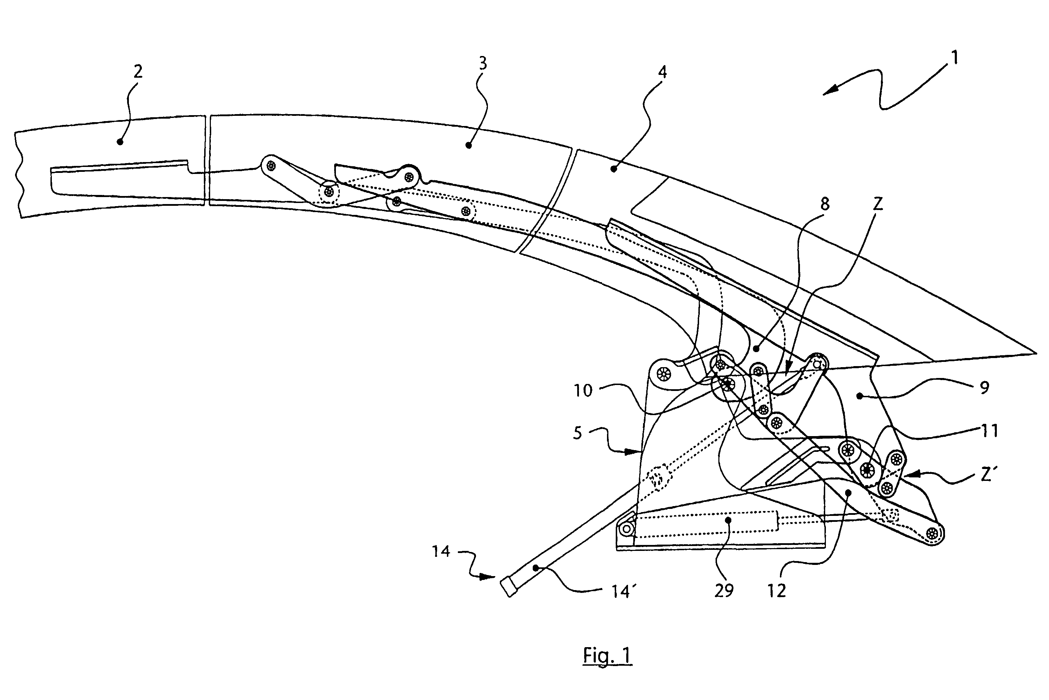

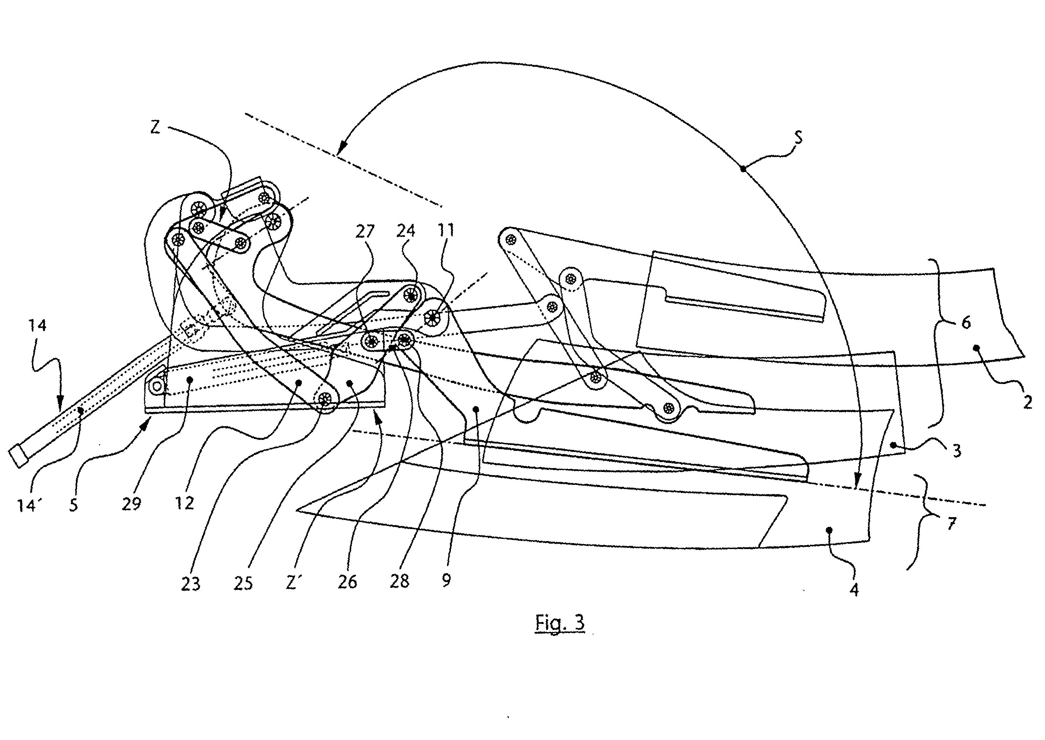

In Fig. 1 ist eine teilweise geschnittene Seitenansicht eines drei Dachteile 2, 3 bzw. 4 aufweisenden Daches 1 eines nicht näher dargestellten Cabriolet-Fahrzeuges veranschaulicht. Aus der dargestellten Schließstellung gemäß Fig. 1 ist das Dach 1 zum rückwärtigen Fahrzeugbereich in eine Öffnungsstellung (Fig. 3) verlagerbar. Im Bereich jeweiliger randseitig der Fahrzeugkarosserie (nicht dargestellt) zugeordneter Hauptlager 5 (von denen in der Seitenansicht nur eines dargestellt ist) weist das Dach 1 eine die beiden vorderen Dachteile 2 und 3 umfassende Bewegungseinheit 6 und eine das hintere Dachteil 4 umfassende hintere Bewegungseinheit 7 auf. Die beiden Bewegungseinheiten 6 und 7 sind durch jeweilig Trag- bzw. Gestängeteile 8 bzw. 9 schwenkbeweglich am Hauptlager 5 in Stützlagern 10 und 11 gehalten und als Zwangsführung zwischen diesen Tragteilen 8 und 9 ist eine Koppelstange 12 vorgesehen.

Bei dem erfindungsgemäß ausgebildeten Dach 1 ist die Koppelstange 12 in einer denkbaren Ausführung zumindest einenends durch ein Zwischengetriebe Z oder Z' mit dem jeweiligen Tragteil 8 bzw. 9 verbunden. In den Darstellungen gemäß Fig. 1 bis 3 ist eine Ausführungsform gezeigt, bei der die Koppelstange 12 sowohl zum vorderen als auch zum hinteren Tragteil 8 und 9 hin jeweils eines der Zwischengetriebe Z und Z' aufweist.

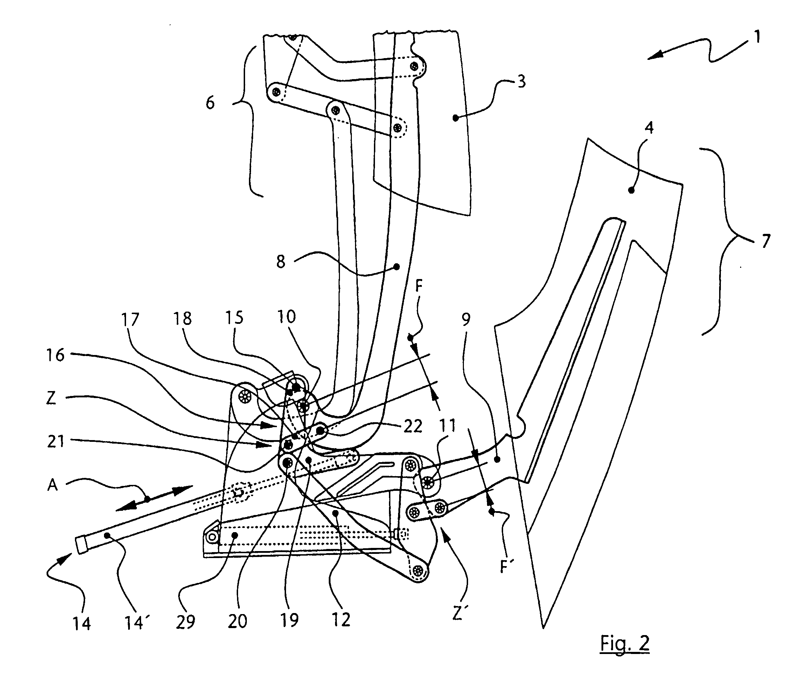

Mit dem Zwischengetriebe Z bzw. Z' ist ein nach Art eines Vorgeleges eine Über- oder Untersetzung der Antriebsbewegung (Pfeil A, Fig. 2) bewirkende Baugruppe vorgesehen, mit der die Drehgeschwindigkeiten bzw. -beschleunigungen der Tragteile 8 und 9 bzw. der beiden Bewegungseinheiten 6 und 7 so beeinflußbar sind, daß mit geringer Antriebsleistung eine weitgehend synchrone Bewegung der Teile möglich ist. Mit den beiden Zwischengetrieben Z und Z' wird insbesondere eine Untersetzung für die mittels der Koppelstange 12 an den Tragteilen 8 und 9 wirksamen Stellgeschwindigkeiten bzw. -beschleunigungen erreicht.

In vorteilhafter Ausführung weist die Dachkonstruktion ein zur automatischen Dachsteuerung vorgesehenes und als Hydraulikzylinder 14' ausgebildetes Antriebsorgan 14 auf.

Dieses Antriebsorgan 14 greift an dem der vorderen Bewegungseinheit 6 zugeordneten Zwischengetriebe Z an, so daß von diesem ausgehend die Öffnungs- bzw. Schließbewegung des Daches 1 entsprechend der Antriebsbewegung (Pfeil A) des Hydraulikzylinders 14' erfolgt. Ebenso ist denkbar, daß das Antriebsorgan 14 dem an der hinteren Bewegungseinheit 7 angreifenden Zwischengetriebe Z' zugeordnet ist (nicht dargestellt).

Das vordere Zwischengetriebe Z ist mit einem am Hauptlager 5 in einem Gelenkpunkt 15 abgestützten Antriebshebel 16 versehen, an dem das Antriebsorgan 14, die Koppelstange 12 und ein mit dem Tragteil 9 der Bewegungseinheit 7 verbundener Schwinghebel 17 angelenkt sind.

Der Antriebshebel 16 ist als ein mit einem ersten Schenkelteil 18 am Hauptlager 5 schwenkbar abgestützter Winkelhebel ausgebildet, dessen mit einem 90°-Winkel abragender zweiter Schenkelteil 19 endseitig mit der Kolbenstange des Hydraulikzylinders 14' verbunden ist. Im Eckbereich zwischen den beiden 90°-Schenkelteilen 18 und 19 ist die Koppelstange 12 in einem Gelenkpunkt 20 so am Antriebshebel 16 angelenkt, daß eine synchrone Übertragung der Bewegung (Pfeil A) zum hinteren Zwischengetriebe Z' hin möglich ist.

Für die Bewegungsübertragung auf das vordere Tragteil 8 ist der Schwinghebel 17 vorgesehen, wobei dieser im Nahbereich zum Gelenkpunkt 20 ebenfalls im Eckbereich des Winkelhebels 16 über einen Gelenkpunkt 21 abgestützt ist. Andererseits greift der Schwinghebel 17 in einem Gelenkpunkt 22 am Tragteil 8 so an, daß zwischen dessen Gelenkpunkt 15 und dem Gelenkpunkt 22 ein als Krafteinleitungshebel wirksamer Abstand F gebildet ist.

Das hintere Zwischengetriebe Z' weist einen an der Koppelstange 12 in einem Gelenkpunkt 23 angelenkten und anderenends am Hauptlager 5 im Nahbereich des Stützlagers 11 in einem Gelenkpunkt 24 festgelegten Antriebshebel 25 auf, der seinerseit über einen Schwinghebel 26 mit in dem Tragteil 9 der hinteren Bewegungseinheit 7 verbunden ist. Der Schwinghebel 26 ist dabei in einem Gelenkpunkt 27 mit dem Antriebshebel 25 verbunden, wobei der Gelenkpunkt 27 im wesentlichen mittig zwischen dem Stützlager 11 und dem Gelenkpunkt 23 angeordnet ist. Ein Gelenkpunkt 28 des Schwinghebels 26 am Tragteil 9 ist mit einem Abstand F' zu dessen Stützlager 11 angeordnet, so daß mit diesem Abstand ein bei Bewegungseinleitung synchron zum vorderen Hebel F wirksamer hinterer Antriebshebel gebildet ist.

Mit den vorbeschriebenen beiden Zwischengetrieben Z bzw. Z' (Vorgelegegetrieben) sind die großen Schwenkwege der Dachbauteile 2, 3 und 4 mit definiertem Krafteinsatz so möglich, daß durch gleichmäßige Beschleunigungen und Bewegungsgeschwindigkeiten Überbelastungen der Bauteile vermieden sind. In Fig. 3 ist die Verlagerung des Tragteiles 9 der hinteren Bewegungseinheit 7 beispielhaft durch einen Bewegungspfeil S verdeutlicht, der die Länge einer Bewegungsbahn verdeutlicht. Mit der Anwendung der beiden Zwischengetriebe Z und Z' werden auf der gesamten Bewegungsbahn S für Gelenkteile ungünstige Hebelverhältnisse vermieden und damit insgesamt verbesserte Krafteinleitungs- und Beschleunigungsbedingungen erreicht. Durch eine optimale Anordnung und Dimensionierung der Dreh- und Gelenkpunkte im Bereich der beiden Zwischengetriebe Z und Z' ist mit geringem konstruktivem Aufwand eine Anpassung an unterschiedliche Dachkonfigurationen möglich.

Durch den Einsatz einer Gasfeder 29 kann eine Dämpfung der beim Ablegen des Daches 1 (Fig. 3) auftretenden Überlagerung von Schwenkbewegung und Gewichtskraft erreicht werden und das Dach 1 kontrolliert in die Ablagestellung bewegt werden. Bei Verlagerung des Daches 1 in die Schließstellung wird die entsprechende Bewegung der Dachteile durch die Gasfeder 29 aktiv unterstützt.

## Patentansprüche

1. Cabriolet-Fahrzeug mit einem drei separate Dachteile (2, 3 und 4) umfassenden und im rückwärtigen Fahrzeugbereich ablegbaren Dach (1), das im Bereich jeweils randseitig der Fahrzeugkarosserie zugeordneter Hauptlager (5) eine die vorderen beiden Dachteile umfassende Bewegungseinheit (6) und eine das hintere Dachteil (4) umfassende hintere Bewegungseinheit (7) bildet, wobei die beiden Bewegungseinheiten (6 und 7) am Hauptlager (5) durch jeweilige Tragteile (8 bzw. 9) schwenkbeweglich abgestützt und diese durch eine als Zwangsführung vorgesehene Koppelstange (12) verbunden sind, **dadurch gekennzeichnet, daß** die Koppelstange (12) zumindest einenends durch ein Zwischengetriebe (Z bzw. Z') mit dem jeweiligen Tragteil (8 bzw. 9) verbunden ist.

2. Cabriolet-Fahrzeug nach Anspruch 1, **dadurch gekennzeichnet, daß** die Koppelstange (12) zum vorderen und hinteren Tragteil (8 bzw. 9) hin jeweils eines der Zwischengetriebe (Z und Z') aufweist.

3. Cabriolet-Fahrzeug nach Anspruch 1 oder 2, **dadurch gekennzeichnet, daß** das jeweilige Zwischengetriebe (Z bzw. Z') nach Art eines eine Über- oder Untersetzung der Antriebsbewegung (Pfeil A) bewirkenden Vorgeleges ausgebildet ist.

4. Cabriolet-Fahrzeug nach einem der Ansprüche 1 bis 3, **dadurch gekennzeichnet, daß** die beiden Zwischengetriebe (Z und Z') jeweils eine Untersetzung für die mittels der Koppelstange (12) an den Tragteilen (8 bzw. 9) wirksamen Stellgeschwindigkeiten bzw. -beschleunigungen bilden.

5. Cabriolet-Fahrzeug nach einem der Ansprüche 1 bis 4, **dadurch gekennzeichnet, daß** ein zur automatischen Dachsteuerung vorgesehenes Antriebsorgan (14) dem an der vorderen Bewegungseinheit (6) angreifenden Zwischengetriebe (Z) oder dem an der hinteren Bewegungseinheit (7) angreifenden Zwischengetriebe (Z') zugeordnet ist.

6. Cabriolet-Fahrzeug nach einem der Ansprüche 1 bis 5, **dadurch gekennzeichnet, daß** das vordere der Zwischengetriebe (Z) mit einem am Hauptlager (5) abgestützten Antriebshebel (16) versehen ist, an dem das Antriebsorgan (14), die Koppelstange (12) und ein mit dem Tragteil (8) der vorderen Bewegungseinheit (6) verbundener Schwinghebel (17) angelenkt sind.

7. Cabriolet-Fahrzeug nach Anspruch 6, **dadurch gekennzeichnet, daß** der Antriebshebel (16) als ein mit einem ersten Schenkelteil (18) am Hauptlager (5) schwenkbar abgestützer Winkelhebel ausgebildet ist, dessen mit einem 90°-Winkel abragender zweiter Schenkelteil (19) endseitig mit dem Antriebsorgan (14) verbunden ist.

8. Cabriolet-Fahrzeug nach Anspruch 7, **dadurch gekennzeichnet, daß** der Antriebshebel (16) im Eckbereich zwischen den beiden 90°-Schenkelteilen (18 und 19) an die Koppelstange (12) angelenkt ist.

9. Cabriolet-Fahrzeug nach einem der Ansprüche 7 bis 8, **dadurch gekennzeichnet, daß** der Schwinghebel (17) ebenfalls im Eckbereich der beiden Schenkelteile (18 und 19) am Antriebshebel (16) angelenkt ist und andererseits mit einem Abstand (F) zu einem Stützlager (10) des Tragteiles (8) an diesem angreift.

10. Cabriolet-Fahrzeug nach einem der Ansprüche 1 bis 9, **dadurch gekennzeichnet, daß** das hintere Zwischengetriebe (Z') einen an der Koppelstange (12) angelenkten und anderenends am Hauptlager (5) gelagerten Antriebshebel (25) aufweist, der über einen Schwinghebel (26) mit dem Tragteil (9) der hinteren Bewegungseinheit (7) verbunden ist.

11. Cabriolet-Fahrzeug nach Anspruch 10, **dadurch gekennzeichnet, daß** der Schwinghebel (25) mittig zwischen den beiden Verbindungsgelenken (23 und 24) des Antriebshebels (25) an diesem angelenkt ist.

12. Cabriolet-Fahrzeug nach Anspruch 10 oder 11, **dadurch gekennzeichnet, daß** der Schwinghebel (26) mit einem Abstand (F') zum Schwenkgelenk (11) des Tragteils (9) an diesem angreift.

## Claims

1. Convertible vehicle having a roof (1), which roof (1) comprises three separate roof parts (2, 3 and 4), can be stowed in the rear part of the vehicle and, in the region of main mountings (5) each associated with an edge of the vehicle bodywork, forms a front unit for movement (6) comprising the two front roof parts and a rear unit for movement (7) comprising the rear roof-part (4), the two units for movement (6 and 7) being supported at the main mounting (5), in such a way as to be movable by pivoting, by respective carrier members (8 and 9 respectively) and said carrier members (8 and 9) being connected by a coupling bar (12) which is intended as a means of forced guidance, **characterised in that** the coupling bar (12) is connected to the relevant carrier member (8 or 9) at at least one end by an intermediate transmission mechanism (Z or Z').

2. Convertible vehicle according to claim 1, **characterised in that** the coupling bar (12) has respective ones of the intermediate transmission mechanisms (Z and Z' respectively) towards the front and rear carrier members (8 and 9).

3. Convertible vehicle according to claim 1 or 2, **characterised in that** each intermediate transmission mechanism (Z or Z') is designed to form a sort of reducing/amplifying transmission which produces a step-up or step-down of the actuating movement (arrow A).

4. Convertible vehicle according to one of claims 1 to 3, **characterised in that** the two intermediate transmission mechanisms (Z and Z') each form a step-down system for the positioning speeds and accelerations which act on the carrier members (8 and 9 respectively) by means of the coupling bar (12)

5. Convertible vehicle according to one of claims 1 to 4, **characterised in that** a driving member (14) which is provided for automatic control of the roof is associated with the intermediate transmission mechanism (Z) which engages with the front unit for movement (6) or with the intermediate transmission mechanism (Z') which engages with the rear unit for movement (7).

6. Convertible vehicle according to one of claims 1 to 5, **characterised in that** the front one (Z) of the intermediate transmission mechanisms is provided with a drive lever (16) supported on the main mounting (5), to which drive lever (16) are hinged the driving member (14), the coupling bar (12), and a pivoting lever (17) connected to the carrier member (8) of the front unit for movement (6).

7. Convertible vehicle according to claim 6, **characterised in that** the drive lever (16) is in the form of an angled lever which is pivotably supported on the main mounting (5) by a first arm (18) and whose second arm (19), which projects away at an angle of 90°, is connected at the end to the driving member (14).

8. Convertible vehicle according to claim 7, **characterised in that** the drive lever (16) is hinged to the coupling bar (12) in the region of the angle between the two arms (18 and 19) which are at 90° to one another.

9. Convertible vehicle according to either of claims 7 and 8, **characterised in that** the pivoting lever (17) is likewise hinged to the drive lever (16) in the region of the angle between the two arms (18 and 19), and on the other hand engages with the carrier member (8) at a distance (F) from a mounting point (10) at which the latter is supported.

10. Convertible vehicle according to one of claims 1 to 9, **characterised in that** the rear intermediate transmission mechanism (Z') has a drive lever (25) which is hinged to the coupling bar (12) and is mounted at the other end on the main mounting (5) and which is connected via a pivoting lever (26) to the carrier member (9) of the rear unit for movement (7).

11. Convertible vehicle according to claim 10, **characterised in that** the pivoting lever (25) is hinged to the drive lever (25) in the centre between the latter's two hinged connecting points (23 and 24).

12. Convertible vehicle according to claim 10 or 11, **characterised in that** the pivoting lever (26) engages with the carrier member (9) at a distance (F') from the latter's pivoting joint (11).

## Revendications

1. Véhicule décapotable comportant un toit (1), composé de trois parties de toit (2, 3 et 4) distinctes et escamotable dans la zone arrière du véhicule, qui forme dans la zone de chacun des paliers principaux (5) associés sur le bord de la carrosserie de véhicule une unité de mouvement avant (6) qui comprend les deux parties de toit avant et une unité de mouvement arrière (7) qui comprend la partie de toit (4) arrière, chacune des deux unités de mouvement (6 et 7) étant soutenue sur le palier principal (5) de façon à pivoter par des pièces de support (8 ou 9) correspondantes, celles-ci étant reliées par une tige de couplage (12) qui sert de guidage forcé,
**caractérisé en ce qu'**
au moins à une extrémité la tige de couplage (12) est reliée par une transmission intermédiaire (Z ou Z') à la pièce de support (8 ou 9) correspondante.

2. Véhicule décapotable selon la revendication 1,
**caractérisé en ce que**
la tige de couplage (12) vers la pièce de support avant et arrière (8 ou 9) comporte respectivement une des transmissions intermédiaires (Z ou Z').

3. Véhicule décapotable selon la revendication 1 ou 2,
**caractérisé en ce que**
chacune des transmissions intermédiaires (Z ou Z') est du type d'un renvoi qui démultiplie ou qui réduit le mouvement d'entraînement (flèche A).

4. Véhicule décapotable selon l'une des revendications 1 à 3,
**caractérisé en ce que**
les deux transmissions intermédiaires (Z ou Z') forment chacune une réduction pour les vitesses ou pour les accélérations de positionnement qui agissent sur les pièces de support (8 ou 9) à l'aide de la tige de couplage (12).

5. Véhicule décapotable selon l'une des revendications 1 à 4,
**caractérisé en ce qu'**
un organe d'entraînement (14) prévu pour commander automatiquement le toit est associé à la transmission intermédiaire (Z) qui s'applique à l'unité de mouvement avant (6) ou à la transmission intermédiaire (Z') qui s'applique à l'unité de mouvement arrière (7).

6. Véhicule décapotable selon l'une des revendications 1 à 5,
**caractérisé en ce que**
la transmission intermédiaire (Z) avant est munie d'un levier d'entraînement (16) soutenu sur le palier principal (5) sur lequel sont articulés l'organe d'entraînement (14), la tige de couplage (12) et un levier oscillant (17) relié à la pièce de support (8) de l'unité de mouvement avant (6).

7. Véhicule décapotable selon la revendication 6,
**caractérisé en ce que**
le levier d'entraînement (16) est un levier coudé soutenu de façon à pivoter sur le palier principal (5) par une première partie de branche (18) et sa deuxième partie de branche (19) en saillie à 90° est reliée à l'extrémité à l'organe d'entraînement (14).

8. Véhicule décapotable selon la revendication 7,
**caractérisé en ce que**
dans la zone angulaire entre les deux parties de branche (18 et 19) à 90°, le levier d'entraînement (16) est articulé à la tige de couplage (12).

9. Véhicule décapotable selon l'une des revendications 7 et 8,
**caractérisé en ce que**
le levier oscillant (17) est également articulé au levier d'entraînement (16) dans la zone angulaire des deux parties de branche (18 et 19), et d'autre part il est attaché sur la pièce de support (8) à une distance (F) d'un palier d'appui (10) de cette pièce

10. Véhicule décapotable selon l'une des revendications 1 à 9,
**caractérisé en ce que**
la transmission intermédiaire arrière (Z') comporte un levier d'entraînement (25), articulé à la tige de couplage (12) et monté à l'autre extrémité sur le palier principal (5), ce levier étant relié à la pièce de support (9) de l'unité de mouvement arrière (7) par l'intermédiaire d'un levier oscillant (26).

11. Véhicule décapotable selon la revendication 10,
**caractérisé en ce que**
le levier oscillant (26) est articulé au centre au levier d'entraînement (25) entre les deux articulations de liaison (23 et 24) du levier d'entraînement.

12. Véhicule décapotable selon la revendication 10 ou 11,
**caractérisé en ce que**
le levier oscillant (26) est attaché à la pièce de support (9) à une distance (F') de l'articulation (11) de cette pièce.
